# EUROPEAN PATENT APPLICATION

(11) **EP 4 397 850 A1**
(43) Date of publication of application: **10.07.2024**
(21) Application number: 24150193.1
(22) Date of filing: 03.01.2024
(51) Int. Cl.: F02K 1/72

(54) **MANUFACTURING THRUST REVERSER BLOCKER DOOR USING OVERMOLDING**

(30) Priority: 03.01.2023 US 202318092759
(71) Applicant: Rohr, Inc., Chula Vista, CA 91910-2098 (US)
(72) Inventor: DAVIS, Jennifer, Carlsbad, 92009 (US)
(74) Representative: Dehns

(57) **Abstract**

A method is provided for manufacturing. This method includes: providing a first skin; providing a second skin; overmolding a cellular core onto the first skin; and joining the second skin to the cellular core to form a blocker door panel for an aircraft thrust reverser system. The blocker door panel includes a plurality of acoustic chambers and a face skin. Each of the acoustic chambers extends through the cellular core from the first skin to the second skin. Each of the acoustic chambers is fluidly coupled with one or more perforations through the face skin. The face skin includes one of the first skin or the second skin.

## Description

### BACKGROUND

### 1. Technical Field

This disclosure relates generally to a thrust reverser system for an aircraft propulsion system and, more particularly, to manufacturing a blocker door for the thrust reverser system.

### 2. Background Information

An aircraft propulsion system may include a thrust reverser system to provide reverse thrust during aircraft landing. Various types and configurations of thrust reverser systems are known in the art. Typically, the known thrust reverser systems include blocker doors for redirecting flow within the aircraft propulsion system. Various types and configurations of blocker doors are known in the art. Various methods are also known in the art for manufacturing a blocker door. While the known blocker doors and methods for manufacturing those blocker doors have various benefits, there is still room in the art for improvement.

### SUMMARY OF THE DISCLOSURE

According to an aspect of the present disclosure, a method is provided for manufacturing. This method includes: providing a first skin; providing a second skin; overmolding a cellular core onto the first skin; and joining the second skin to the cellular core to form a blocker door panel for an aircraft thrust reverser system. The blocker door panel includes a plurality of acoustic chambers and a face skin. Each of the acoustic chambers extends through the cellular core from the first skin to the second skin. Each of the acoustic chambers is fluidly coupled with one or more perforations through the face skin. The face skin includes one of the first skin or the second skin.

According to another aspect of the present disclosure, another method is provided for manufacturing. This method includes forming a blocker door panel for a thrust reverser system of an aircraft propulsion system. The blocker door panel includes a face skin, a back skin, a cellular core and a plurality of acoustic chambers. Each of the acoustic chambers extends through the cellular core from the face skin to the back skin. Each of the acoustic chambers is fluidly coupled with one or more perforations through the face skin. The forming of the blocker door panel includes overmolding the cellular core onto one of the face skin or the back skin.

According to still another aspect of the present disclosure, another method is provided for manufacturing. This method includes: forming a blocker door panel for a thrust reverser system of an aircraft propulsion system, wherein the blocker door panel includes a face skin, a back skin, a cellular core and a plurality of acoustic chambers, each of the acoustic chambers extends through the cellular core from the face skin to the back skin, and each of the acoustic chambers is fluidly coupled with one or more perforations through the face skin; and overmolding a mount onto a member of the blocker door panel, wherein the mount includes a tab, and the member of the blocker door panel include one of the face skin or the back skin.

The forming of the blocker door panel may include overmolding the cellular core onto one of the face skin or the back skin.

The cellular core may be configured from or otherwise include thermoplastic material.

The cellular core may include fiber reinforcement within a thermoplastic matrix.

The overmolding may include: arranging a mold adjacent the first skin; and injecting thermoplastic material into a plurality of channels. Each of the channels may be formed by and between the first skin and the mold.

The acoustic chambers may be a first acoustic chamber. The first acoustic chamber may extend axially along a centerline axis through the cellular core from the first skin to the second skin. The first acoustic chamber may have a polygonal cross-sectional geometry in a reference plane perpendicular to the centerline axis.

The acoustic chambers may be a first acoustic chamber. The first acoustic chamber may extend axially along a centerline axis through the cellular core from the first skin to the second skin. The first acoustic chamber may have a rectangular cross-sectional geometry in a reference plane perpendicular to the centerline axis.

The first skin may be configured from or otherwise include thermoplastic material.

The providing of the first skin may include stamp forming the first skin.

The second skin may be configured from or otherwise include thermoplastic material.

The providing of the second skin may include stamp forming the second skin.

The face skin may include the first skin. The second skin may form a back skin of the blocker door panel.

The face skin may include the second skin. The first skin may form a back skin of the blocker door panel.

The method may also include perforating the face skin prior to the bonding of the second skin to the cellular core.

The method may also include overmolding a mount onto a member of the blocker door panel. The mount may be configured for pivotally coupling the blocker door panel to another structure of the aircraft thrust reverser system.

The method may also include overmolding a mount onto a member of the blocker door panel. The mount may be configured to pivotally couple a drag link to the blocker door panel.

The cellular core may extend laterally to a side of the blocker door panel.

The cellular core may extend longitudinally to an end of the blocker door panel.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side illustration of an aircraft propulsion system with a thrust reverser system in a stow configuration.
FIG. 2 is a side illustration of the aircraft propulsion system with the thrust reverser system in a deployed configuration.
FIG. 3 is a partial side sectional illustration of an aft portion of the aircraft propulsion system with the thrust reverser system in the stow configuration.
FIG. 4 is a partial side sectional illustration of an aft portion of the aircraft propulsion system with the thrust reverser system in the deployed configuration.
FIG. 5 is an illustration of a blocker door.
FIG. 6 is a partial sectional illustration of the blocker door along line 6-6 of FIG. 5.
FIG. 7 is a partial sectional illustration of the blocker door along line 7-7 of FIG. 5.
FIG. 8 is a cross-sectional illustration through a portion of a cellular core.
FIG. 9 is a schematic side illustration of another blocker door with tapered ends.
FIG. 10 is a flow diagram of a method for manufacturing a blocker door.
FIGS. 11A-F are schematic illustrations depicting an exemplary sequence for manufacturing a blocker door.
FIG. 12 is a schematic side illustration of a portion of a blocker door with an overmolded mount.

### DETAILED DESCRIPTION

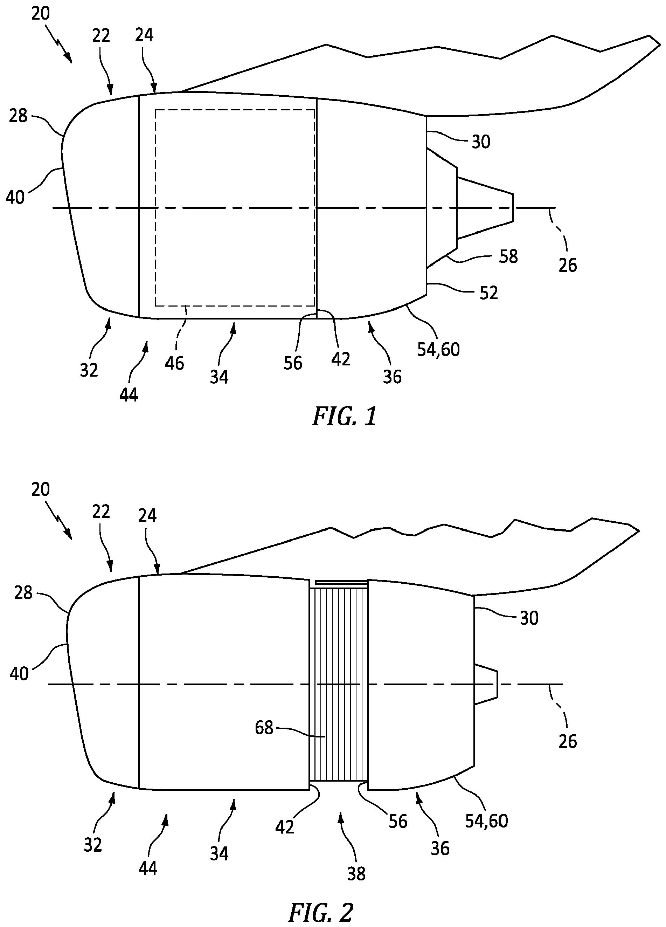

FIG. 1 illustrates an aircraft propulsion system 20 for an aircraft such as, but not limited to, a commercial airliner or a cargo plane. The propulsion system 20 includes a nacelle 22 and a gas turbine engine. This gas turbine engine may be configured as a high-bypass turbofan engine. Alternatively, the gas turbine engine may be configured as a turbojet engine or any other type of gas turbine engine capable of propelling the aircraft during flight.

The nacelle 22 is configured to house and provide an aerodynamic cover for the gas turbine engine. An outer structure 24 of the nacelle 22 extends axially along an axial centerline 26 (e.g., a centerline of the propulsion system 20, the nacelle 22 and/or the gas turbine engine) between a nacelle forward end 28 and a nacelle aft end 30. The nacelle outer structure 24 of FIG. 1 includes a nacelle inlet structure 32, one or more fan cowls 34 (one such cowl visible in FIG. 1) and a nacelle aft structure 36, which is configured as part of or includes a thrust reverser system 38 (see also FIG. 2).

The inlet structure 32 is disposed at the nacelle forward end 28. The inlet structure 32 is configured to direct a stream of air through an inlet opening 40 at the nacelle forward end 28 and into a fan section of the gas turbine engine.

The fan cowls 34 are disposed axially between the inlet structure 32 and the aft structure 36. Each fan cowl 34 of FIG. 1, in particular, is disposed at (e.g., on, adjacent or proximate) an aft end 42 of a stationary portion 44 of the nacelle 22, and extends forward to the inlet structure 32. Each fan cowl 34 is generally axially aligned with the fan section of the gas turbine engine. The fan cowls 34 are configured to provide an aerodynamic covering for a fan case 46.

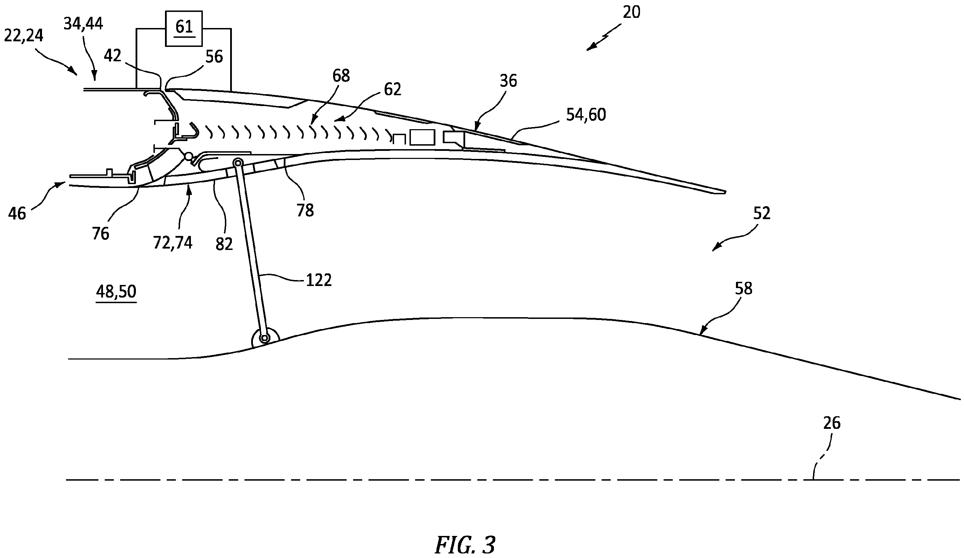

Briefly, the fan case 46 extends circumferentially around the axial centerline 26 and thereby circumscribes the fan section. Referring to FIG. 3, the fan case 46 along with the nacelle 22 form a forward outer peripheral boundary of a forward thrust duct 48 of the propulsion system 20. In the embodiment of FIG. 3, the forward thrust duct 48 is configured as a bypass duct. The forward thrust duct 48 of FIG. 3, for example, at least partially or completely forms a bypass flowpath 50 within the propulsion system 20, which bypass flowpath 50 bypasses (e.g., flows around and/or outside of, not through) a core of the gas turbine engine to a bypass nozzle 52. Thus, during nominal propulsion system operation (e.g., when the thrust reverser system 38 is in its stowed configuration; see FIG. 3), the forward thrust duct 48 is configured to facilitate forward thrust for the propulsion system 20; e.g., direct fluid (e.g., fan / compressed air) out of the propulsion system 20 through the bypass nozzle 52 in an axially aft direction.

Referring again to FIG. 1, the aft structure 36 includes a translating sleeve 54 for the thrust reverser system 38. The translating sleeve 54 of FIG. 1 is disposed at the nacelle aft end 30. This translating sleeve 54 extends axially along the axial centerline 26 between a forward end 56 of the translating sleeve 54 and the nacelle aft end 30. The translating sleeve 54 is configured to partially form an aft outer peripheral boundary of the forward thrust duct 48 and its flowpath 50 (see FIG. 3). The translating sleeve 54 may also be configured to form the bypass nozzle 52 for the bypass flowpath 50 with an inner structure 58 of the nacelle 22 (e.g., an inner fixed structure (IFS)), which nacelle inner structure 58 houses the core of the gas turbine engine. Briefly, the turbine engine core typically includes a compressor section, a combustor section and a turbine section of the gas turbine engine.

The translating sleeve 54 of FIG. 1 includes a pair of sleeve segments 60 (e.g., halves) arranged on opposing sides of the propulsion system 20 (one such sleeve segment visible in FIG. 1). The present disclosure, however, is not limited to such an exemplary translating sleeve configuration. For example, the translating sleeve 54 may alternatively have a substantially tubular body. For example, the translating sleeve 54 may extend more than three-hundred and thirty degrees (330°) around the axial centerline 26.

Referring to FIGS. 1 and 2, the translating sleeve 54 is an axially translatable structure. Each translating sleeve segment 60, for example, may be slidably connected to one or more stationary structures (e.g., a pylon and a lower bifurcation) through one or more respective track assemblies. Each track assembly may include a rail mated with a track beam; however, the present disclosure is not limited to the foregoing exemplary sliding connection configuration.

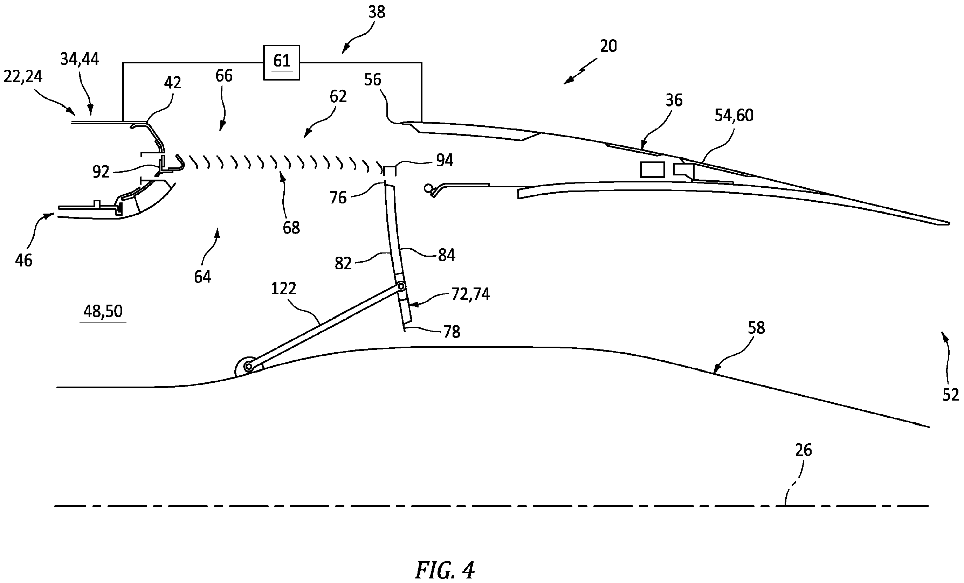

Referring to FIGS. 3 and 4, the translating sleeve 54 is configured with (e.g., coupled to) one or more actuators 61 (e.g., linear actuators). These actuators 61 are configured to move the translating sleeve 54 axially along the axial centerline 26 and relative to the stationary portion 44. More particularly, the actuators 61 are configured to axially translate the translating sleeve 54 between a forward stowed position (see FIGS. 1 and 3) where the thrust reverser system 38 is in the stowed configuration and an aft deployed position (see FIGS. 2 and 4) where the thrust reverser system 38 is in a deployed configuration.

In the forward stowed position of FIG. 3, the translating sleeve 54 provides the functionality described above.

In the aft deployed position of FIG. 4, the translating sleeve 54 opens one or more thrust reverser ducts 62 (one visible in FIG. 4). Each of these thrust reverser ducts 62 extends radially through the nacelle outer structure 24 from a respective thrust reverser duct inlet 64 to a respective thrust reverser duct outlet 66. The thrust reverser duct inlet 64 is located radially adjacent the forward thrust duct 48. The thrust reverser duct inlet 64 fluidly couples the respective thrust reverser duct 62 with the forward thrust duct 48 when the thrust reverser system 38 is in its deployed configuration.

As the translating sleeve 54 moves from the stowed position of FIG. 3 to the deployed position of FIG. 4, one or more blocker doors 72 are deployed. Each blocker doors 72 is configured to divert the fluid (e.g., fan / compressed air) from the forward thrust duct 48 and its flowpath 50 into a respective one of the thrust reverser ducts 62 and through a respective one of the cascade structures 68 to provide reverse thrust for the propulsion system 20; e.g., direct the fluid out of the propulsion system 20 through the thrust reverser duct outlets 66 generally in an axially forward direction and/or a radially outward direction.

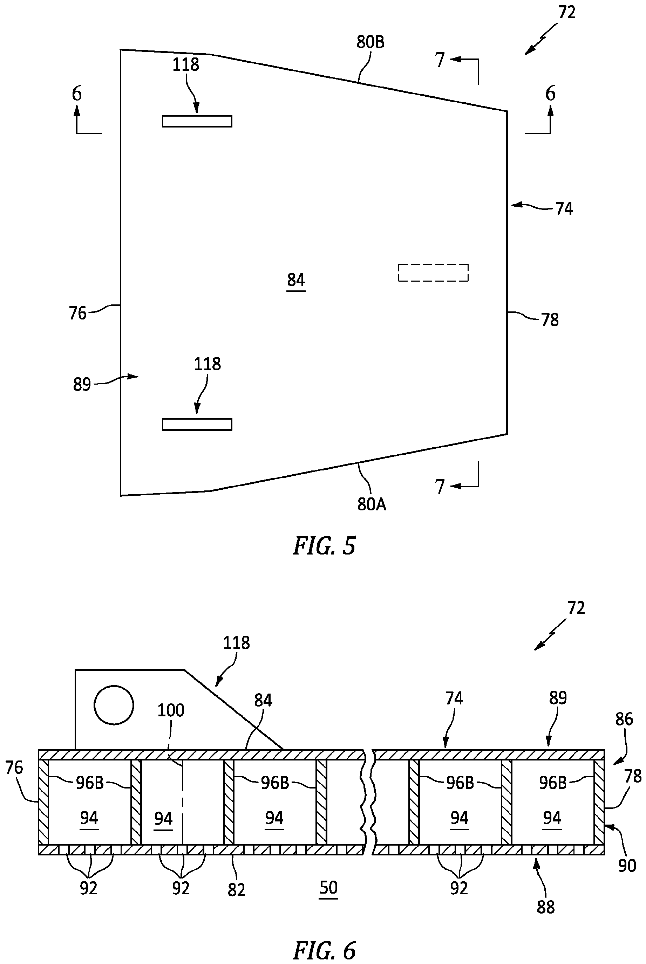

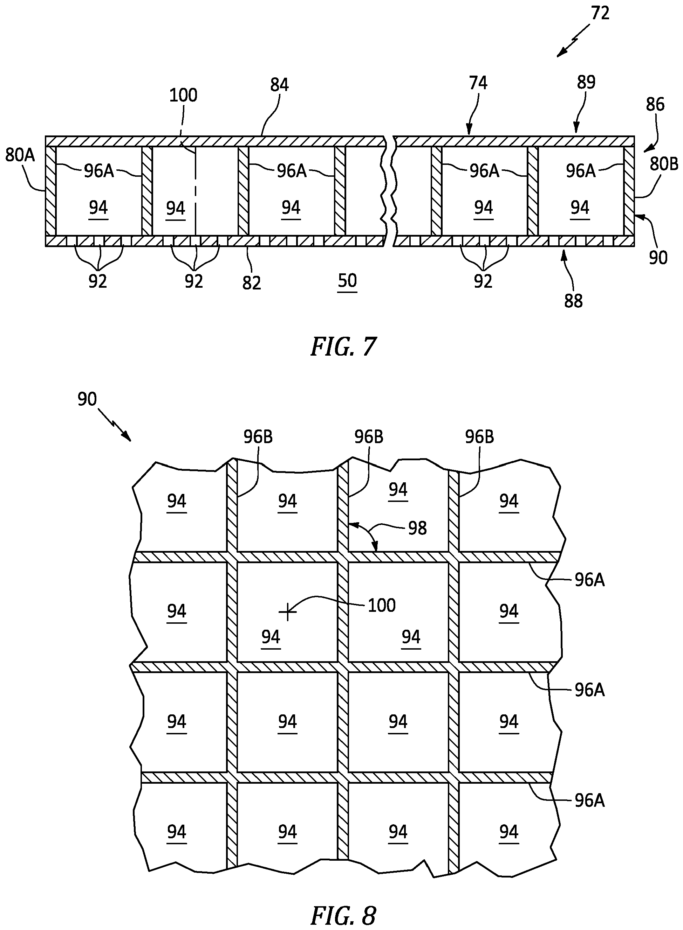

Referring to FIG. 5, each of the blocker doors 72 includes a blocker door panel 74. The door panel 74 extends longitudinally between and to a first end 76 of the respective blocker door 72 and its door panel 74 and a second end 78 of the respective blocker door 72 and its door panel 74. The blocker door first end 76 may be an axially forward end when the respective blocker door 72 is in its stowed position (see FIG. 3) and/or a radial outer end when the respective blocker door 72 is in its deployed position (see FIG. 4). The blocker door second end 78 may be an axially aft end when the respective blocker door 72 is in its stowed position (see FIG. 3) and/or a radial inner end when the respective blocker door 72 is in its deployed position (see FIG. 4). The door panel 74 of FIG. 5 extends laterally (e.g., tangentially or circumferentially when stowed) between and to opposing lateral sides 80A and 80B (generally referred to as "80") of the respective blocker door 72 and its door panel 74. Referring to FIGS. 6 and 7, the door panel 74 extends vertically between and to a face side 82 of the door panel 74 and a back side 84 of the door panel 74. The panel face side 82 may be a radial inner side of the door panel 74 when the respective blocker door 72 is in its stowed position (see FIG. 3) and/or an axial forward side of the door panel 74 when the respective blocker door 72 is in its deployed position (see FIG. 4). In the stowed position of FIG. 3, the panel face side 82 may form an outer peripheral boundary of the flowpath 50. In the deployed position of FIG. 4, the panel face side 82 may form a blocker face of the respective blocker door 72 for redirecting the fluid into a respective one of the thrust reverser ducts 62. Referring again to FIGS. 6 and 7, the panel back side 84 may be a radial outer side of the door panel 74 when the respective blocker door 72 is in its stowed position (see FIG. 3) and/or an axial aft side of the door panel 74 when the respective blocker door 72 is in its deployed position (see FIG. 4).

The door panel 74 is configured with an acoustic structure 86 for passively attenuating sound (e.g., noise) propagating through the flowpath 50; e.g., a volume adjacent the door panel 74. The door panel 74 of FIGS. 6 and 7, for example, includes an inner face skin 88, an outer back skin 89 and a cellular core 90 vertically between and connected to the face skin 88 and the back skin 89. Referring to FIG. 6, any one or more or all of these panel members 88-90 may extend longitudinally from (or about) the blocker door first end 76 to (or about) the blocker door second end 78. Referring to FIG. 7, any one or more or all of the panel members 88-90 may also or alternatively extend laterally from (or about) the blocker door first side 80A to (or about) the blocker door second side 80B.

Each of the panel skins 88, 89 may be configured as a relatively thin sheet or layer of material. For example, each panel skin 88, 89 may be formed from a sheet or layer of thermoplastic material. This thermoplastic material may be a pure (e.g., only) thermoplastic. Alternatively, the thermoplastic material may include fiber reinforcement within a matrix of thermoplastic. Examples of the thermoplastic (e.g., the pure thermoplastic or the thermoplastic matrix) include, but are not limited to, polyether ether ketone (PEEK), polyaryletherketone (PAEK), polyether ketone ketone (PEKK) and polyphenylene sulfide (PPS). Examples of the fiber reinforcement include, but are not limited to, fiberglass fibers, carbon fibers, aramid fibers (e.g., Kevlar^{®} fibers), or some combination therewith. The present disclosure, however, is not limited to the foregoing exemplary duct structure materials.

The face skin 88 is configured to at least partially or completely form the panel face side 82. At least a portion or an entirety of the face skin 88 is perforated. The face skin 88 of FIGS. 6 and 7 includes a plurality of perforations 92; e.g., apertures such as through holes. These face skin perforations 92 are distributed longitudinally and/or laterally along the face skin 88. Each of the face skin perforations 92 extends vertically through the face skin 88 between opposing sides of the face skin 88.

The back skin 89 is configured to at least partially or completely form the panel back side 84. At least a portion or an entirety of the back skin 89 is non-perforated.

The cellular core 90 is configured to form a plurality of acoustic chambers 94 (e.g., resonance cavities, etc.) within the door panel 74 and its acoustic structure 86. The cellular core 90 of FIGS. 6 and 7, for example, includes a grid of sidewalls 96A and 96B (generally referred to as "96"). Each of these sidewalls 96 extends vertically between and is connected to the face skin 88 and the back skin 89. Referring to FIG. 8, the first sidewalls 96A extend in a first direction (e.g., a longitudinal direction) and the second sidewalls 96B extend in a second direction (e.g., a lateral direction). The second direction and, thus, each second sidewall 96B is angularly offset from the first direction and, thus, each first sidewall 96A by an angle 98. This angle 98 may be a right angle (90°) or a non-zero acute angle (e.g., greater than or equal to 45°, but less than 90°). With this arrangement, each acoustic chamber 94 of FIG. 8 is between and formed by a respective neighboring (e.g., adjacent) pair of the first sidewalls 96A. Each acoustic chamber 94 is between and formed by a respective neighboring pair of the second sidewalls 96B. Referring to FIGS. 6 and 7, each acoustic chamber 94 extends vertically through the cellular core 90 along a centerline axis 100 of that acoustic chamber 94 from the face skin 88 to the back skin 89. Referring to FIG. 8, one or more or all of the acoustic chambers 94 may each have a polygonal cross-sectional geometry when viewed, for example, in a reference plane perpendicular to its centerline axis 100. Examples of the polygonal cross-sectional geometry include, but are not limited to, a rectangular cross-sectional geometry and a hexagonal cross-sectional geometry. The present disclosure, however, is not limited to such an exemplary cellular core and/or acoustic chamber configuration. More particularly, various other types of cellular cores for acoustic structures are known in the art, and the present disclosure is not limited to any particular ones thereof.

The cellular core 90 may be formed from a thermoplastic material. This thermoplastic material may be a pure (e.g., only) thermoplastic. Alternatively, the thermoplastic material may include fiber reinforcement within a matrix of thermoplastic. Examples of the thermoplastic (e.g., the pure thermoplastic or the thermoplastic matrix) include, but are not limited to, polyether ether ketone (PEEK), polyaryletherketone (PAEK), polyether ketone ketone (PEKK) and polyphenylene sulfide (PPS). Examples of the fiber reinforcement include, but are not limited to, fiberglass fibers, carbon fibers, aramid fibers (e.g., Kevlar^{®} fibers), or some combination therewith. The present disclosure, however, is not limited to the foregoing exemplary duct structure materials. In some embodiments, the panel members 88-90 may be formed from a common thermoplastic material. In other embodiments, any one or more or all of the panel members 88-90 may be formed form a different thermoplastic material. For example, the panel skins 88 and 89 may be formed using woven fiber reinforcement, whereas the cellular core 90 may be formed using chopped / discontinuous fiber reinforcement.

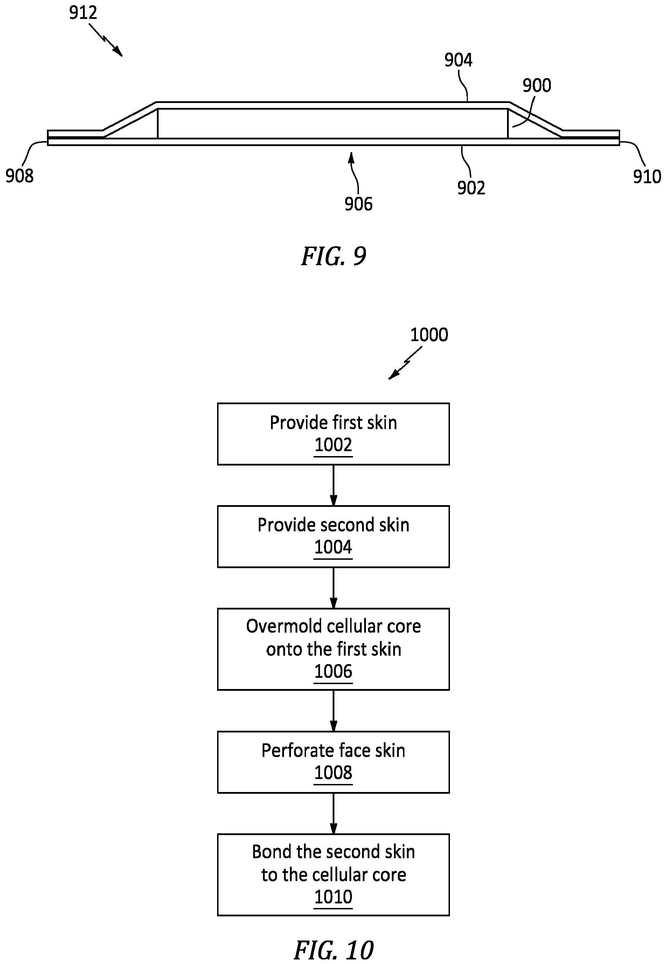

With the foregoing arrangement, the acoustic structure 86 may cover a substantial portion of or an entirety of the panel face side 82. By contrast, referring to FIG. 9, where a metal honeycomb core 900 is disposed between a face skin 902 and a back skin 904 to form an acoustic panel 906, the honeycomb core 900 is typically spaced form edges 908 and 910 of a blocker door panel 912 to provide room for tapering the skins 902 and 904 together for bonding. Thus, only a portion of a face side of the blocker door panel 912 includes acoustic attenuation. Furthermore, only a portion of the blocker door panel 912 is structurally reinforced by the honeycomb core 900.

FIG. 10 is flow diagram of a method 1000 for manufacturing a blocker door for a thrust reverser system of an aircraft propulsion system. For ease of description, the manufacturing method 1000 may be described below with reference to the blocker doors 72 described above. The manufacturing method of the present disclosure, however, is not limited to such an exemplary blocker door configuration. Furthermore, the blocker door manufactured using the method 1000 is not limited to being implemented into the exemplary thrust reverser system described above. For example, in other embodiments, the blocker door may be included in another type of thrust reverser system; e.g., a hidden door thrust reverser system, a target-type thrust reverser system, a clamshell-type thrust reverser system, etc.

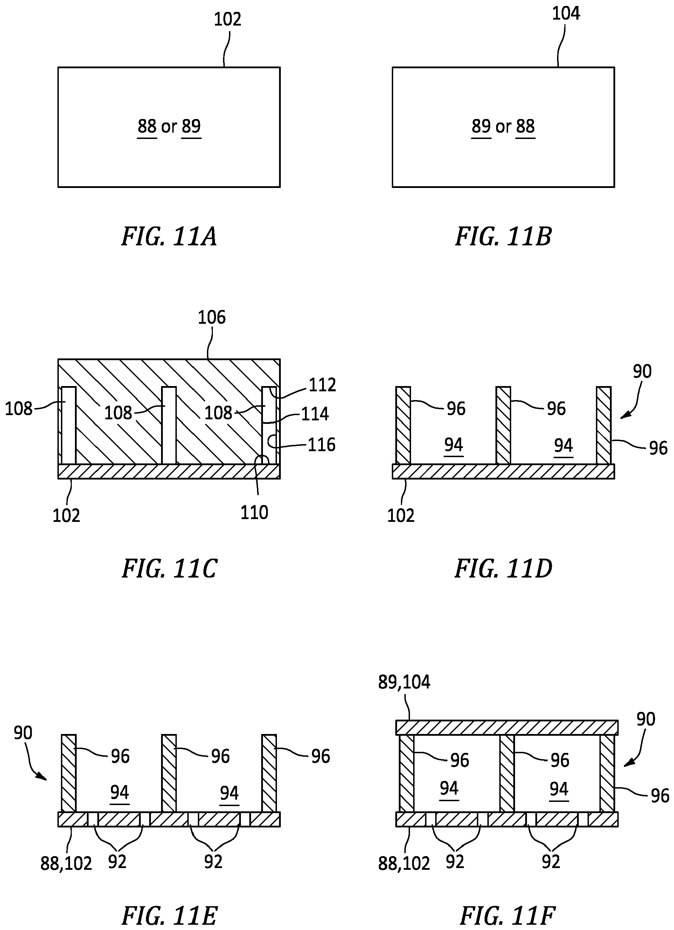

In step 1002, referring to FIG. 11A, a first skin 102 is provided. The thermoplastic material, for example, may be stamp formed to form the first skin 102. This first skin 102 may be configured as the face skin 88 or the back skin 89. However, for ease of description, the first skin 102 may be described below as the face skin 88.

In step 1004, referring to FIG. 11B, a second skin 104 is provided. The thermoplastic material, for example, may be stamp formed to form the second skin 104. This second skin 104 may be configured as the back skin 89 or the face skin 88. However, for ease of description, the second skin 104 may be described below as the back skin 89.

In step 1006, referring to FIGS. 11C and 11D, the cellular core 90 is provided. The thermoplastic material, for example, may be overmolded onto the first skin 102 (e.g., the face skin 88, or alternatively the back skin 89) to form the cellular core 90 on and integral with the first skin 102. In particular, referring to FIG. 11C, an overmolding mold 106 for the cellular core 90 is arranged adjacent (e.g., onto, on top of, etc.) the first skin 102. The thermoplastic material may be injected into a plurality of open channels 108 to form the walls 96 of the cellular core 90. Each of these channels 108 may be formed by and extend vertically between a surface 110 of the first skin 102 and a channel end surface 112 in the mold 106. Each of the channels 108 may also be formed by and extend (e.g., laterally and/or longitudinally) between opposing channel side surfaces 114 and 116 in the mold 106. Following the overmolding, referring to FIG. 11D, the mold 106 may be removed to provide the cellular core 90 overmolded onto the first skin 102.

In step 1008, referring to FIG. 11E, the face skin 88 is perforated. The face skin perforations 92 may be formed in the face skin 88 using various techniques such as, but not limited to, punching, drilling, laser ablation or other machining processes.

In step 1010, referring to FIG. 11F, the second skin 104 is bonded to the cellular core 90. The second skin 104, for example, may be welded to the cellular core 90 and its sidewalls 96 to form the blocker door panel 74 and its acoustic structure 86.

The manufacturing method 1000 is described above as perforating the face skin 88 following the overmolding of the cellular core 90. However, in other embodiments, the face skin 88 may be perforated prior to overmolding the cellular core 90. In still other embodiments, the face skin 88 may be perforated following the bonding of the second skin 104 to the overmolded cellular core 90.

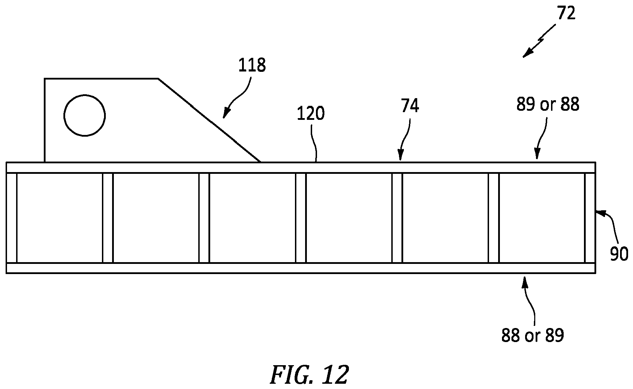

In some embodiments, referring to FIG. 12, a mount 118 (or multiple mounts) may be overmolded onto a member 120 (or multiple members) of the door panel 74. The mount 118 of FIG. 12, for example, may be overmolded onto the panel member 120 prior to the step 1006, between the steps 1006 and 1010, or following the step 1010. The panel member 120 may be the back skin 89, and the mount 118 may be configured for pivotally connecting the respective blocker door 72 and its door panel 74 to another structure of the thrust reverser system. For example, the mount 118 may be used as a hinge member (see FIGS. 5 and 6) for pivotally connecting the respective blocker door 72 and its door panel 74 to the translating sleeve 54 (see FIGS. 3 and 4). Alternatively, the panel member 120 may be the face skin 88, and the mount 118 may be configured for pivotally connecting a drag link 122 (see FIGS. 3 and 4) to the respective blocker door 72 and its door panel 74. The mount 118 of FIG. 12 may include one or more flanges; e.g., tabs.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A method for manufacturing, comprising:
providing a first skin (102);
providing a second skin (104);
overmolding a cellular core (90) onto the first skin (102); and
joining the second skin (104) to the cellular core (90) to form a blocker door panel (74) for an aircraft thrust reverser system (38), wherein the blocker door panel (74) includes a plurality of acoustic chambers (94) and a face skin (88), each of the plurality of acoustic chambers (94) extends through the cellular core (90) from the first skin (102) to the second skin (104), each of the plurality of acoustic chambers (94) is fluidly coupled with one or more perforations (92) through the face skin (88), and the face skin (88) comprises one of the first skin (102) or the second skin (104).

2. The method of claim 1, wherein the cellular core (90) comprises thermoplastic material.

3. The method of claim 1 or 2, wherein the cellular core (90) includes fiber reinforcement within a thermoplastic matrix.

4. The method of any preceding claim, wherein the overmolding comprises:
arranging a mold (106) adjacent the first skin (102); and
injecting thermoplastic material into a plurality of channels (108), wherein each of the plurality of channels (108) is formed by and between the first skin (102) and the mold (106).

5. The method of any preceding claim, wherein:
the plurality of acoustic chambers (94) comprise a first acoustic chamber (94);
the first acoustic chamber (94) extends axially along a centerline axis (100) through the cellular core (90) from the first skin (102) to the second skin (104); and
the first acoustic chamber (94) has a polygonal or rectangular cross-sectional geometry in a reference plane perpendicular to the centerline axis (100).

6. The method of any preceding claim, wherein the first skin (102) comprises thermoplastic material; and/or wherein the providing of the first skin (102) comprises stamp forming the first skin (102).

7. The method of any preceding claim, wherein the second skin (104) comprises thermoplastic material; and/or wherein the providing of the second skin (104) comprises stamp forming the second skin (104).

8. The method of any preceding claim, wherein either:
the face skin (88) comprises the first skin (102); and
the second skin (104) forms a back skin (89) of the blocker door panel (74); or
the face skin (88) comprises the second skin (104); and
the first skin (102) forms a back skin (89) of the blocker door panel (74).

9. The method of any preceding claim, further comprising perforating the face skin (88) prior to the bonding of the second skin (104) to the cellular core (90).

10. The method of any preceding claim, further comprising overmolding a mount (118) onto a member (120) of the blocker door panel (74), the mount (118) configured for pivotally coupling the blocker door panel (74) to another structure (54) of the aircraft thrust reverser system (38).

11. The method of any of claims 1 to 9, further comprising overmolding a mount (118) onto a member (120) of the blocker door panel (74), the mount configured to pivotally couple a drag link (122) to the blocker door panel (74).

12. The method of any preceding claim, wherein the cellular core (90) extends laterally to a side (80A; 80B) of the blocker door panel (74).

13. The method of any preceding claim, wherein the cellular core (90) extends longitudinally to an end (76; 78) of the blocker door panel (74).

14. A method for manufacturing, comprising:
forming a blocker door panel (74) for a thrust reverser system (38) of an aircraft propulsion system (20);
the blocker door panel (74) including a face skin (88), a back skin (89), a cellular core (90) and a plurality of acoustic chambers (94), each of the plurality of acoustic chambers (94) extending through the cellular core (90) from the face skin (88) to the back skin (89), and each of the plurality of acoustic chambers (94) fluidly coupled with one or more perforations (92) through the face skin (88); and
the forming of the blocker door panel (74) comprising overmolding the cellular core (90) onto one of the face skin (88) or the back skin (89).

15. A method for manufacturing, comprising:
forming a blocker door panel (74) for a thrust reverser system (38) of an aircraft propulsion system (20), wherein the blocker door panel (74) includes a face skin (88), a back skin (89), a cellular core (90) and a plurality of acoustic chambers (94), each of the plurality of acoustic chambers (94) extends through the cellular core (90) from the face skin (88) to the back skin (89), and each of the plurality of acoustic chambers (94) is fluidly coupled with one or more perforations (92) through the face skin (88); and
overmolding a mount (118) onto a member (120) of the blocker door panel (74), wherein the mount (118) comprises a tab, and the member (120) of the blocker door panel comprises one of the face skin (88) or the back skin (89), optionally wherein the forming of the blocker door panel (74) comprises overmolding the cellular core (90) onto one of the face skin (88) or the back skin (89).
